# DEMANDE DE BREVET EUROPEEN

(11) **EP 1 955 603 A1**
(43) Date de publication de la demande: **13.08.2008**
(21) Numéro de dépôt: 07300775.9
(22) Date de dépôt: 06.02.2007
(51) Int. Cl.: A23L 1/36, A23N 5/00

(54) **Procède de depelliculage de graines de fruits a coques, dispositif associe et produits alimentaires obtenus**

(71) Demandeur: Jean, Guy Hervé, 24260 Mauzens-et-Miremont (FR); Olivier, Jean-Louis, 24700 Saint Sauveur Lalande (FR); Bousquet, Jérôme Alain Olivier, 24140 Villamblard (FR); Ther, Didier Jacques, 24750 Boulazac (FR); Boisseau, Thierry Hervé, 24380 Grun Bordas (FR)
(72) Inventeur: Jean, Guy Hervé, 24260, Mauzens-et-Miremont (FR)
(74) Mandataire: Fantin, Laurent

(57) **Abrégé**

L'objet de l'invention est un procédé de traitement de graines de fruits à coques, notamment de cerneaux de noix, de noisettes, caractérisé en ce qu'il comprend une étape de dépelliculage comprenant un traitement thermique de la pellicule de l'amande concernée suivie immédiatement d'un traitement mécanique.

L'invention couvre aussi le dispositif associé comprenant un bâti (10) avec un convoyeur général (12), un module (14) d'alimentation, un module (16) de traitement thermique et/ou texturant, un module (18) de traitement mécanique, et un module (20) de traitement aromatisant.

L'invention couvre enfin le produit alimentaire obtenu constitué d'amandes de fruits à coques, dépelliculées et croquantes à coeur ou moelleuse à coeur, aromatisées ou non, grillées extérieur ou non, pour l'apéritif et le grignotage.

## Description

La présente invention concerne un procédé de dépelliculage de graines de fruits à coques, notamment de noix, de noisettes ou d'amandes.

L'invention couvre un dispositif associé permettant la mise en oeuvre du procédé avec des agencements variables en fonction des types de produits alimentaires recherchés.

L'invention couvre aussi les produits alimentaires obtenus par ce procédé, notamment les produits alimentaires pour l'apéritif et le grignotage.

La consommation et la demande en produits alimentaires du type cerneaux de noix, amandes, noisettes augmentent fortement.

On entend pour la suite de la description par le terme "graine", la partie interne et comestible du fruit, après que la coque a été retirée.

Or ces graines de fruits sont constituées de l'amande proprement dite recouverte d'une fine peau dite pellicule, intimement liée à ladite amande. Cette pellicule très mince est fragile d'une part, ce qui complique son retrait et elle assure une barrière relativement étanche d'autre part, ce qui rend difficile l'accès à l'amande proprement dite pour en modifier les qualités organoleptiques. Il convient donc dans la plupart des cas de retirer cette peau pour permettre la consommation de l'amande sous différentes formes.

Les quantités de graines consommées se comptent en milliers de tonnes par pays, ce qui implique la nécessité de développer des procédés et dispositifs particulièrement performants. En effet, il est impensable de prévoir un traitement manuel d'une telle étape de retrait de la pellicule recouvrant ces amandes.

Actuellement, ces graines sont peu souvent dépelliculées, et par exemple pour obtenir des amandes salées, le sel est déposé à la surface de ladite amande si bien que le consommateur subit l'agression du sel avant même d'avoir accès à l'amande elle-même. La pellicule également présente reste aussi peu agréable car très astringente.

Dans le but d'une transformation de ces graines, il est aussi nécessaire de retirer la pellicule extérieure. Alors, elles peuvent être grillées, salées, aromatisées ou encore enrobées suivant les destinations.

C'est ainsi que l'on connaît les amandes enrobées d'une mince couche chocolatée, ou de caramel ou encore de sucre mais généralement, la pellicule reste présente sous la couche d'enrobage.

On sait aussi que le dispositif associé doit être polyvalent en sorte de pouvoir traiter les différents types d'amandes par différentes voies et obtenir ainsi les produits alimentaires recherchés, grillés, salés, aromatisés par exemple avec différentes textures expansées, croquantes ou moelleuses à coeur ou encore croquante extérieur et moelleuse à coeur. On entend par le terme "expansé" le fait de modifier la texture de l'amande en retirant une partie de l'eau, ce qui rend l'amande plus légère comme si elle avait été expansée sans pour autant que son volume extérieur soit modifié.

De même, un tel dispositif doit pouvoir traiter indifféremment les types d'amandes, sans modification et juste avec des réglages, qu'il s'agisse de noix, noisettes ou amandes afin de pouvoir le mettre en service sur des périodes les plus longues possibles.

La présente invention permet par la mise en oeuvre de son procédé et à travers le dispositif associé, l'obtention de produits alimentaires nouveaux par leur texture tout en conservant les qualités intrinsèques et notamment en évitant toute détérioration des acides gras présents dans les amandes.

Enfin, il est à noter que le dispositif permet de travailler en continu.

L'invention est maintenant décrite par les différentes étapes du procédé et en regard des dessins annexés qui représentent un mode de réalisation particulier du dispositif associé, non limitatif, les différentes figures montrant :
- figure 1 : une vue schématique du dispositif permettant la mise en oeuvre du procédé selon la présente invention,

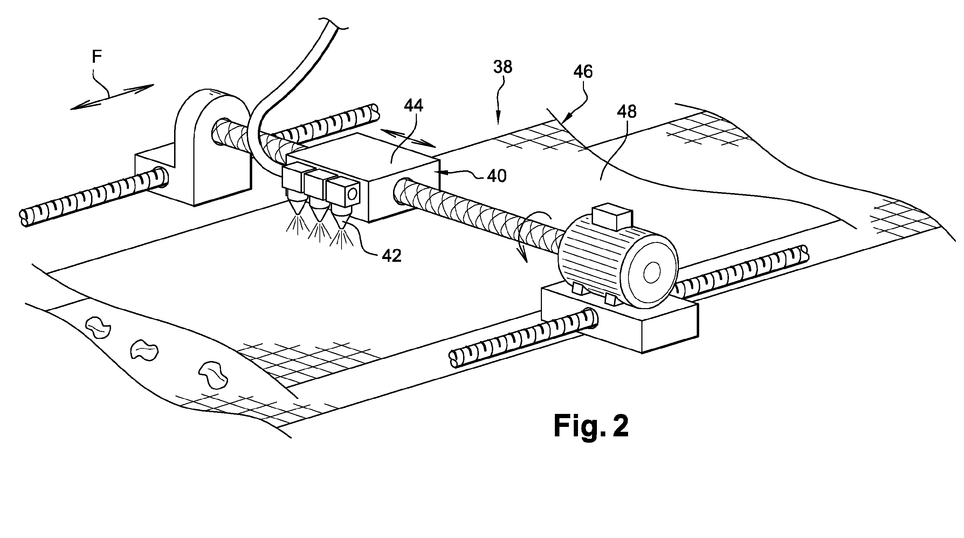

- figure 2 : une vue schématique détaillée des moyens de soufflage.

La présente invention est maintenant décrite en faisant référence indifféremment aux deux figures.

Le procédé consiste essentiellement en une étape de traitement thermique de la graine concernée, suivie immédiatement d'un traitement mécanique.

Il est aussi prévu de façon complémentaire mais non nécessaire, un traitement texturant.

Le traitement thermique peut prendre diverses formes.

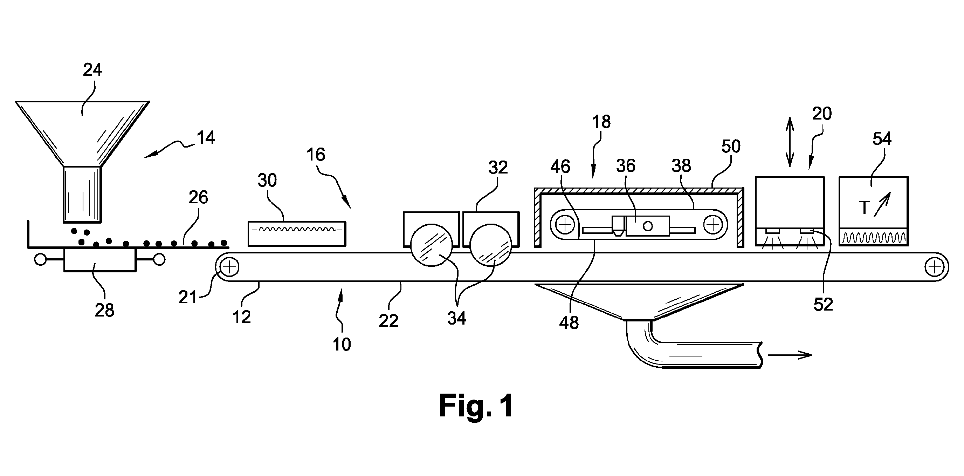

Un premier agencement préférentiel est proposé sur la figure 1. Le procédé prévoit ainsi selon un premier mode de réalisation un traitement par rayonnement infrarouge. Ce traitement provoque l'échauffement en surface de la pellicule et donc la montée en température de l'eau contenue dans ladite pellicule et de l'eau emprisonnée entre la pellicule et l'amande. Cet échauffement est néanmoins réduit de sorte à ne pas provoquer un grillage de la peau.

La peau et l'eau d'interface se trouvent alors préchauffées.

Ensuite, le procédé prévoit un traitement thermique par émission de micro-ondes. La gamme de fréquences et la puissance utilisées sont fonction des graines traitées et des résultats à obtenir.

En effet, dans cette application qui vise uniquement à décoller la pellicule de l'amande proprement dite en vue de son retrait, les paramètres doivent permettre aux micro-ondes de rester en surface sans pénétrer dans l'amande, en apportant l'énergie suffisante pour monter l'eau présente à une température comprise entre 95 et 100°C. Le chauffage préalable par le rayonnement infrarouge permet de concentrer l'absorption des micro-ondes à l'interface peau/amande. Les molécules d'eau sont alors agitées et provoquent l'échauffement recherché sans modification de la pellicule, tout au plus en provoquant une migration de l'eau de la surface de l'amande vers l'interface.

De fait, l'expansion de cette eau portée en température et sa transformation en vapeur provoque le décollement de cette pellicule.

Ce traitement thermique est suivi du traitement mécanique pour retirer la pellicule décollée de l'amande. Ce traitement mécanique consiste à recourir de préférence à de l'air soufflé sous une pression relativement forte de quelques bars.

La difficulté de retrait de la pellicule, présentée par cette opération réside dans le profil tourmenté desdites amandes par exemple celui d'un cerneau de noix.

Dans ce cas la suprématie de l'air sous pression est parfaitement compréhensible.

En variante de traitement mécanique, il est possible de faire passer les amandes sur des rouleaux montés rotatifs et munis de moyens de saisie des pellicules par exemple avec des pinces du type celles utilisées sur les épilateurs mécaniques. De telles pinces sont ouvertes sur une première partie des 360° de rotation et se ferment sur une seconde partie permettant la saisie des pellicules ou du moins des portions de pellicules lorsque l'amande est au droit des pinces dans la première partie et le lâcher des ces mêmes pellicules ou portions de pellicules dans la seconde partie.

Le procédé nécessite un traitement mécanique pour le retrait de la pellicule mais il est nécessaire d'ajuster la succession temporelle de ces étapes de sorte que la pellicule soit décollée au moment du traitement mécanique. Suivant le traitement thermique subi, il faut pouvoir ajuster le délai dans lequel intervient ce traitement mécanique afin qu'il agisse de façon optimisée lorsque la pellicule est décollée au mieux de l'amande qui la porte et avant qu'elle ne se recolle puisque ce décollement est réversible. Ceci exige un délai de latence ajusté entre le traitement thermique et le traitement mécanique.

Le traitement thermique qui a été décrit peut comprendre aussi d'autres variantes tout aussi efficaces mais d'un agencement un peu plus compliqué. Le traitement avec un rayonnement infrarouge suivi d'une action de micro-ondes peut être remplacé par un traitement avec deux actions successives de micro-ondes avec des fréquences et/ou des puissances différentes. Dans ce cas, il est aussi nécessaire de tenir compte des législations en terme de micro-ondes qui peuvent engendrer, pour certaines fréquences des contraintes de blindage ou autres, préjudiciables à des installations industrielles rentables économiquement, faciles d'entretien, aisées de conduite et manipulables sans difficulté.

Dans certains cas, il peut être utile de faire subir aux graines un pré traitement avec une ré-humidification de la surface de la pellicule et de l'amande par exemple avec de la vapeur d'eau. Ce pré traitement permet de préparer l'amande et sa pellicule au traitement thermique par micro-ondes.

Le procédé selon l'invention permet également de faire subir aux amandes non seulement une opération de dépelliculage mais aussi un traitement texturant. Ce traitement texturant peut de plus être réalisé de façon simultanée au traitement thermique, en temps masqué.

C'est ainsi que les micro-ondes peuvent permettre non seulement de porter l'eau de surface en température en vue du dépelliculage mais aussi de provoquer une modification de la texture de l'amande de façon plus ou moins profonde jusqu'à provoquer une modification de la texture à coeur.

Sous l'effet des micro-ondes pénétrantes, l'eau interstitielle migre du coeur vers la surface, ce qui modifie la texture interne de l'amande et provoque un apport d'eau en surface, plus particulièrement à l'interface amande/pellicule. Cette eau migrant, elle laisse une certaine porosité modifiant la texture, sans pour autant modifier le volume extérieur de l'amande concernée.

En fonction de la puissance de ces micro-ondes, il est possible d'atteindre une texture avec un coeur d'amande croquant.

On note de nouveau que les qualités organoleptiques de l'amande ne sont pas perturbées puisque la température reste limitée.

En complément des ces étapes de dépelliculage incluant un traitement thermique, un traitement mécanique suivi d'un éventuel traitement texturant, le procédé prévoit également de façon optionnelle un traitement aromatisant.

On entend par traitement aromatisant tant le fait de donner un goût salé ou sucré qu'un goût aromatisé proprement dit par exemple au caramel, à la vanille ou tout autre parfum.

Pour y parvenir, le traitement aromatisant prévoit d'utiliser les capacités d'absorption de l'amande après le traitement thermique, notamment lorsque ce traitement a provoqué une migration de l'eau interstitielle. Dans ce cas, au cours de la phase de refroidissement, l'amande a tendance à absorber tout liquide déposé à sa surface.

Le procédé prévoit de pulvériser une solution contenant les arômes souhaités, solution qui imprègne l'amande plus ou moins à coeur en fonction du traitement thermique subi, de la phase de refroidissement, de la nature de l'amande, de la température du liquide pulvérisé, de sa fluidité, de sa tension de surface et de nombreux autres paramètres qui restent à la portée de l'homme de l'art et ne relèvent que du réglage.

Afin de permettre la mise en oeuvre du procédé selon la présente invention, le dispositif associé est maintenant décrit en détail suivant un mode de réalisation particulier, non limitatif. Ce dispositif vise à apporter la polyvalence recherchée.

Ce dispositif comprend un bâti 10 avec un convoyeur général 12, un module 14 d'alimentation, un module 16 de traitement thermique et texturant, un module 18 de traitement mécanique, un module 20 de traitement aromatisant.

Le bâti 10 permet le montage des différents modules et assure le support du convoyeur général 12. Ce convoyeur général 12 comprend de façon connue des tambours 21 entraînant un tapis 22 de convoyage. Ce tapis est de type particulier car il doit répondre à certains impératifs. Ce tapis doit être à mailles, il doit pouvoir supporter la température, jusqu'à 200°C pour donner un ordre d'idées et être insensibles aux micro-ondes.

De façon préférentielle, un tapis réalisé à partir de fibres commercialisées sous la marque déposée Kevlar, est parfaitement adapté. Une maille carrée de 0,5 cm est également adaptée pour les applications envisagées.

Le module 14 d'alimentation comprend de façon connue une trémie 24, avec une goulotte 26 équipée d'un moteur vibrant 28 à vibrations d'intensités et/ou de fréquences variables.

Cette trémie permet de doser le débit de graines à traiter et à délivrer sur le convoyeur général.

Le module 16 de traitement thermique et texturant comprend une unité 30 de traitement thermique par émission de rayonnements infrarouges. Cette unité est isolée thermiquement et la puissance des moyens émetteurs de rayonnements infrarouges, par exemple des résistances, est réglable.

Ainsi en combinant la vitesse du tapis du convoyeur général et la puissance, il est possible d'obtenir l'effet recherché sur l'amande à traiter en accord avec le procédé.

Le module 16 de traitement thermique et structurant peut être complété par des moyens d'émission de vapeur d'eau par exemple au moyen de buses projetant de la vapeur d'eau saturée.

Le module 16 de traitement thermique et texturant comprend également une unité 32 de traitement par émission de micro-ondes. En l'occurrence ce module de traitement comprend deux magnétrons 34 avec des guides d'ondes adaptés pour diriger les micro-ondes vers le tapis et plus particulièrement vers les graines portées par ce tapis.

La fréquence est déterminée et se situe préférentiellement dans une plage comprise de quelques milliers de méga Hertz.

La puissance doit également être réglable de façon précise et sur une plage importante pour une adaptation en fonction de la vitesse du tapis, du traitement retenu et des effets recherchés. Ainsi, il est possible de couvrir les applications du décollement de la pellicule de l'amande jusqu'aux effets structurant à coeur.

Le module 18 de traitement mécanique comprend une unité 36 de soufflage et une unité 38 de maintien des amandes.

L'unité 36 de soufflage comprend de façon avantageuse au moins un ensemble 40 comprenant lui-même au moins une buse 42 alimentée en air sous forte pression, de l'ordre de quelques bars pour donner un ordre de grandeur.

Chaque buse a un bec de sortie avec un profil choisi en fonction des applications. De façon connue, les profils de sortie de l'air ont une forme de faisceau plat, de cône étroit ou large ou de multi jets.

Cet ensemble comprend également de façon avantageuse un chariot 44 mobile en translation transversale par rapport au sens de déplacement longitudinal du tapis du convoyeur général. Ce chariot porte les buses 42 et peut ainsi émettre les jets d'air sous pression, au moment optimisé du décollement de la pellicule par rapport à l'amande et assurer un balayage des graines sous tous les angles.

Selon un perfectionnement, il est prévu deux ensembles successifs suivant le sens de déplacement du tapis.

Ces deux ensembles peuvent aussi être disposés de façon successive mais le premier soufflant du haut vers le bas et le second soufflant du bas vers le haut.

Chaque ensemble est réglable en position longitudinale suivant les flèches F.

Les soufflages sont orientés de façon combinée et l'intervention du soufflage doit être réglable par rapport à la sortie du module 16 de traitement thermique. En effet, il faut que le soufflage intervienne au moment où la pellicule est encore décollée et ceci durant une période suffisante pour assurer le soufflage de la périphérie complète de chaque amande. Il est indispensable d'obtenir un dépelliculage complet, au moins en sortie du dernier ensemble 40.

L'unité 38 de maintien comprend un presseur 46 comportant un tapis 48 de même nature que celle du convoyeur général, avec sa propre motorisation.

Ce tapis 48 est disposé immédiatement au dessus du tapis du convoyeur général, en vis-à-vis, ce tapis ayant les mêmes caractéristiques que le tapis du convoyeur général, par exemple à mailles carrées de 0,5 cm, réalisé à partir de fibres commercialisées sous la dénomination Kevlar.

Ce presseur est à hauteur réglable en fonction des amandes qui sont traitées de sorte à venir au contact de la périphérie, avec une légère pression.

Ainsi grâce à des vitesses différentielles, il est possible si besoin est, de faire tourner les amandes sur elles mêmes entre les deux tapis, tout en les faisant progresser vers l'aval du convoyeur général.

Ce presseur comporte de façon avantageuse un capotage 50.

L'agencement général du dispositif selon l'invention prévoit de positionner chaque ensemble 40 immédiatement au dessus de la partie du tapis 48 en vis-à-vis du tapis du convoyeur général.

L'air sous pression est ainsi soufflé à travers les mailles dudit tapis.

Si un ensemble 40 est disposé sous le convoyeur 22 général, il est également disposé immédiatement sous la partie de tapis de ce convoyeur général en vis-à-vis du tapis du presseur.

Le module 20 suivant, dit d'aromatisation, considéré dans le sens de progression du convoyeur général, comporte différents moyens adaptés comme des buses 52 de sorte qu'il puisse être pulvérisé un liquide ayant des qualités gustatives sur la périphérie des amandes dépelliculées mais encore chaudes et aptes à absorber.

Ce module est utilisé de façon optionnelle.

De même, il a été représenté des seconds moyens tels qu'un grilloir 54 permettant de porter en température la surface de l'amande dépelliculée et provoquer des modifications du goût notamment en transformant les propriétés du liquide ajouté.

En complément de l'installation, des moyens d'aspiration des pellicules retirées sont montrés sur la figure 1.

Le fonctionnement est décrit ci-après.

Les amandes avec leur pellicules, brutes de retrait de coques, sont distribuées par la goulotte à partir de la trémie, les vibrations permettant de doser le débit de façon adaptée malgré le milieu totalement hétérogène.

Les amandes sont ensuite délivrées sur le convoyeur général pour entrer dans le module de traitement thermique. En fonction des besoins, le module de traitement thermique utilise le rayonnement infrarouge et/ou de l'émission de micro-ondes complété si nécessaire d'une ré humidification.

La puissance et la durée de passage sont réglées de façon adaptées, souvent au moyen de tests car la nature des amandes varie entre les lots, les variétés, les provenances.

Les amandes chauffées ont leur pellicule décollée de l'amande proprement dite mais la pellicule ne peut se retirer toute seule. Cette étape de retrait est obtenue par le frottement des mailles des filets constituant les tapis des convoyeurs et du presseur et essentiellement par soufflage de l'air sous pression, les amandes étant maintenues entre les tapis du convoyeur et du presseur et présentées sur toute leur périphérie au soufflage. La combinaison des jets, leur forme et la puissance générée permettent de retirer la pellicule de tous les types d'amandes.

Les pellicules retirées sont aspirées simultanément ou extraites au moyen des rouleaux pinceurs.

En sortie, suivant les traitements subis, les amandes sont moelleuses à coeur lorsque les micro-ondes sont utilisées de façon légère, croquantes à coeur lorsque les micro-ondes sont émises de façon puissante et/ou prolongée avec tous les résultats intermédiaires possibles.

Le poste d'aromatisation conduit à conférer aux amandes un goût différent du goût naturel suivant leurs destinations.

Enfin, en sortie, le poste de finition en l'occurrence le grilloir 54 permet de modifier encore le goût final du produit qu'il y ait eu ou non aromatisation.

Le procédé et le dispositif permettent ainsi de résoudre les problèmes posés, de conduire à une réalisation polyvalente, et d'obtenir des produits alimentaires nouveaux tels que des amandes dépelliculées et croquantes à coeur ou moelleuses à coeur, aromatisées ou non, grillées extérieur ou non, pour l'apéritif et le grignotage.

## Revendications

1. Procédé de traitement de graines de fruits à coques, notamment de cerneaux de noix, de noisettes, d'amandes, **caractérisé en ce qu'**il comprend une étape de dépelliculage comprenant un traitement thermique de la pellicule de l'amande concernée suivie immédiatement d'un traitement mécanique.

2. Procédé de traitement de graines de fruits à coques selon la revendication 1, **caractérisé en ce qu'**il comprend un traitement texturant.

3. Procédé de traitement de graines de fruits à coques selon la revendication 1 ou 2, **caractérisé en ce que** le traitement thermique est un traitement par rayonnement infrarouge de sorte à réaliser un préchauffage de la pellicule et de l'eau emprisonnée entre la pellicule et l'amande.

4. Procédé de traitement de graines de fruits à coques selon l'une quelconque des revendications précédentes, **caractérisé en ce que** le traitement thermique est un traitement par émission de micro-ondes de sorte à provoquer l'échauffement de l'eau résidant à l'interface pellicule/amande et le décollement de cette pellicule.

5. Procédé de traitement de graines de fruits à coques selon la revendication 4, **caractérisé en ce que** la gamme de fréquences des micro-ondes utilisées est de quelques milliers de méga Hertz.

6. Procédé de traitement de graines de fruits à coques selon les revendications 4 et 5, **caractérisé en ce qu'**il consiste à utiliser successivement le traitement par rayonnement infrarouge pour provoquer un préchauffage de la pellicule et de l'eau contenue entre la pellicule et l'amande afin de concentrer l'absorption des micro-ondes.

7. Procédé de traitement de graines de fruits à coques selon l'une quelconque des revendications précédentes, **caractérisé en ce que** le traitement thermique est précédé d'une ré-humidification.

8. Procédé de traitement de graines de fruits à coques selon l'une quelconque des revendications précédentes, **caractérisé en ce qu'**il consiste en un soufflage avec de l'air soufflé sous forte pression.

9. Procédé de traitement de graines de fruits à coques selon l'une quelconque des revendications 1 à 7, **caractérisé en ce qu'**il consiste à faire passer les amandes sur des rouleaux montés rotatifs et munis de moyens de saisie des pellicules.

10. Dispositif de traitement de graines de fruits à coques selon le procédé en accord avec les revendications 1 à 9, **caractérisé en ce qu'**il comprend un bâti (10) avec un convoyeur général (12), un module (14) d'alimentation, un module (16) de traitement thermique et/ou texturant, un module (18) de traitement mécanique, et un module (20) de traitement aromatisant.

11. Dispositif de traitement de graines de fruits à coques selon la revendication 10, **caractérisé en ce que** le convoyeur général (12) comprend un tapis (22) de convoyage à mailles, supportant la température et insensible aux micro-ondes.

12. Dispositif de traitement de graines de fruits à coques selon la revendication 10 ou 11, **caractérisé en ce que** le module (14) d'alimentation comprend une trémie (24), une goulotte (26) équipée d'un moteur vibrant (28) à vibrations d'intensités et/ou de fréquences variables de façon à doser le débit de graines à traiter et à délivrer sur le convoyeur général (12).

13. Dispositif de traitement de graines de fruits à coques selon la revendication 10, 11 ou 12, **caractérisé en ce que** le module (16) de traitement thermique et texturant comprend une unité (30) de traitement thermique par émission de rayonnements infrarouges et/ou une unité (32) de traitement par émission de micro-ondes.

14. Dispositif de traitement de graines de fruits à coques selon l'une quelconque des revendications 10 à 13, **caractérisé en ce qu'**il comprend des moyens de ré-humidification.

15. Dispositif de traitement de graines de fruits à coques selon l'une des revendications 10 à 14, **caractérisé en ce que** le module (18) de traitement mécanique comprend une unité (36) de soufflage et une unité (38) de maintien des amandes.

16. Dispositif de traitement de graines de fruits à coques selon la revendication 15, **caractérisé en ce que** l'unité (36) de soufflage comprend au moins un ensemble (40) comprenant lui-même au moins une buse (42) alimentée en air sous forte pression.

17. Dispositif de traitement de graines de fruits à coques selon la revendication 16, **caractérisé en ce que** chaque buse (42) a un bec de sortie avec un profil de sortie de l'air en forme de faisceau plat, de cône étroit ou large ou de multi jets.

18. Dispositif de traitement de graines de fruits à coques selon la revendication 16 ou 17, **caractérisé en ce que** chaque ensemble (40) comprend un chariot (44) mobile en translation transversale par rapport au sens de déplacement longitudinal du tapis du convoyeur général, ce chariot portant les buses (42) de façon à émettre des jets d'air sous pression, au moment optimisé en assurant un balayage des graines sous tous les angles.

19. Dispositif de traitement de graines de fruits à coques selon l'une des revendications 15 ou 18, **caractérisé en ce qu'**il comprend deux ensembles (40) successifs suivant le sens de déplacement du tapis.

20. Dispositif de traitement de graines de fruits à coques selon la revendication 16 ou 19, **caractérisé en ce que** chaque ensemble (40) est réglable en position longitudinale.

21. Dispositif de traitement de graines de fruits à coques selon la revendication 15 ou 20, **caractérisé en ce que** l'unité (38) de maintien comprend un presseur (46) comportant un tapis (48) de même nature et disposé immédiatement au dessus du tapis du convoyeur général (12), à hauteur réglable en fonction des amandes qui sont traitées de sorte à venir au contact de la périphérie, avec une légère pression.

22. Dispositif de traitement de graines de fruits à coques selon l'une des revendications 11 à 21, **caractérisé en ce que** le module d'aromatisation (20) comprend des moyens (52) de pulvérisation d'un liquide aromatisant et/ou un grilloir (54).

23. Produit alimentaire obtenu selon le procédé des revendications 1 à 9, au moyen du dispositif selon l'une des revendications 10 à 22, **caractérisé en ce qu'**il est constitué de graines de fruits à coques, dépelliculées et croquantes à coeur ou moelleuses à coeur, aromatisées ou non, grillées extérieur ou non, pour l'apéritif et le grignotage.
